# EUROPÄISCHE PATENTSCHRIFT

(11) **EP 1 700 522 B1**
(45) Veröffentlichungstag und Bekanntmachung des Hinweises auf die Patenterteilung: **19.03.2008**
(21) Anmeldenummer: 06003770.2
(22) Anmeldetag: 24.02.2006
(51) Int. Cl.: A01J 25/16

(54) **Wendevorrichtung für Käsehorden**
Reversing device for cheese trays
Dispositif de retournement de châssis à fromage

(30) Priorität: 11.03.2005 DE 102005011409
(43) Veröffentlichungstag der Anmeldung: 13.09.2006
(73) Patentinhaber: ALPMA Alpenland Maschinenbau GmbH, 83543 Rott am Inn (DE)
(72) Erfinder: Dürmeier, Siegfried, 84556 Kastl (DE)
(74) Vertreter: Manitz, Finsterwald & Partner GbR

(56) Entgegenhaltungen:
- DE-A1- 2 120 837
- DE-A1- 3 247 819
- DE-A1- 19 728 024
- DE-B- 1 218 207
- FR-A- 2 015 670
- US-A- 5 253 568

## Beschreibung

Die Erfindung betrifft eine Wendevorrichtung für Käsehorden mit einer Einrichtung zum Zusammenspannen einer oberen und einer unteren Käsehorde und zum Wenden der zusammengespannten Käsehorden.

Derartige Wendevorrichtungen sind aus dem Stand der Technik bekannt und werden dafür eingesetzt, Käsestücke, welche auf Käsehorden aufliegen, während des Reifungsprozesses um 180° zu wenden. Bei einem derartigen Wendevorgang können die beiden nachfolgend erläuterten Probleme auftreten:

Einerseits können Käsestücke während des Reifungsprozesses an der Käsehorde, auf der sie positioniert sind, "festwachsen", so dass sich diese Käsestücke nach einem Wenden der Käsehorde um 180° nicht allein aufgrund der Schwerkraftwirkung von der Käsehorde lösen. Um diesen Ablöseprozess und ein Herabfallen des Käsestückes auf die nach dem Wendevorgang untere Käsehorde zu bewirken, ist es üblich, Abdrückvorrichtungen vorzusehen, die mit Abdrückelementen ausgestattet sind, welche von oben durch die Gitterstruktur der jeweils oberen Käsehorde hindurchbewegt werden und dadurch den Käse von dieser oberen Käsehorde lösen. Bei einem derartigen Abdrückvorgang ist es von Nachteil, dass die Käsestücke auf die nach dem Wendevorgang untere Käsehorde fallen und diese somit in Schwingung versetzen, was wiederum dazu führt, dass sich die Käsestücke auf der nach dem Wendevorgang unteren Käsehorde verschieben und somit nicht mehr in der gewünschten Weise relativ zueinander positioniert sind.

Der gleiche nachteilige Effekt wird auch durch eine Durchbiegung der nach dem Wendevorgang unteren Käsehorde bewirkt, wobei die Durchbiegung auf das Eigengewicht der Gesamtheit der Käsestücke zurückzuführen ist.

Andererseits müssen auch solche auf Käsehorden aufliegende Käsestücke gewendet werden, die während des Reifungsprozesses noch eine rutschige Oberfläche aufweisen. Derartige Käsestücke wachsen zwar nicht an den Käsehorden fest, verrutschen jedoch sehr leicht während des Wendevorgangs, da sie während dieses Wendevorgangs zwischen den beiden Käsehorden zunächst nicht wirksam fixiert sind. Diese fehlende Fixierung während des Wendevorgangs ist insbesondere darauf zurückzuführen, dass die verwendeten Käsehorden aufgrund ihrer häufigen Wiederverwendung in der Regel etwas durchgebogen bzw. ausgebaucht sind, so dass der Abstand zwischen den beiden die Käsestücke während des Wendevorgangs haltenden Käsehorden im zentralen Bereich der Käsehorden größer ist als in deren Randbereich. Besonders in denjenigen Bereichen, in denen der Abstand zwischen den beiden Käsehorden vergrößert ist, können rutschige Käsestücke nicht ohne größeren Aufwand in ausreichender Weise fixiert werden, da ihre Dicke geringer ist als der gegenseitige Abstand der Käsehorden in diesen Bereichen.
Das letztgenannte Problem kann z.B. durch eine Wendevorrichtung gemäß DE 32 47 819 C2 gelöst werden, da bei einer derartigen Vorrichtung Druckkissen vorgesehen sind, welche sich durch die Gitterstäbe der Käsehorden hindurchdrücken und somit für eine Fixierung der Käsestücke sorgen. Eine solche Vorrichtung ist jedoch mit hohem wirtschaftlichem Aufwand verbunden und darüber hinaus auch unter hygienischen Gesichtspunkten bedenklich.

Eine Aufgabe der Erfindung besteht darin, eine Wendevorrichtung der eingangs genannten Art derart weiterzubilden, dass die Käsestücke auch nach dem Wendevorgang noch möglichst exakt auf den dann jeweils unteren Käsehorden positioniert sind. Ein Verrutschen der Käsestücke auf den Käsehorden soll also beim Ablegen der Käsestücke auf der nach dem Wendevorgang unteren Käsehorde und gemäß einer bevorzugten Ausführungsform der Erfindung auch während des Wendevorgangs wirksam vermieden werden.

Erfindungsgemäß wird diese Aufgabe durch die Merkmale des Anspruchs und insbesondere dadurch gelöst, dass zumindest die jeweils untere Käsehorde auf einem Rahmen aufliegt, dessen Umfangslinie im Wesentlichen an die Umfangslinie der Käsehorde angepasst ist, und
dass zumindest eine die Käsehorde in einem von ihrer Umfangslinie beabstandeten Bereich unterstützende Verstrebung vorgesehen ist.

Durch diese überraschend einfache Maßnahme, für die im Stand der Technik jedoch ein Vorbild fehlt, wird erreicht, dass die auf dem erfindungsgemäßen Rahmen aufliegende Käsehorde nicht nur im Bereich ihrer Umfangslinie, sondern vielmehr auch in davon beabstandeten Bereichen, insbesondere in ihrem zentralen Bereich, von der erfindungsgemäßen Verstrebung unterstützt wird. Diese Unterstützung hat zur Folge, dass sich die Käsehorde aufgrund des Eigengewichtes der auf ihr aufliegenden Käsestücke nicht durchbiegen kann. Ferner kann die auf dem erfindungsgemäß ausgebildeten Rahmen und der Verstrebung abgestützte Käsehorde durch von einer oberen Käsehorde abgedrückte und auf die untere Käsehorde herabfallende Käsestücke nicht in Schwingungen versetzt werden. Erfindungsgemäß ist vielmehr sichergestellt, dass sich die Oberfläche der auf dem Rahmen und der Verstrebung aufliegenden Käsehorde zumindest weitestgehend exakt innerhalb einer einzigen Ebene erstreckt, so dass hier kein unerwünschtes Verrutschen der Käsestücke aufgrund von Durchbiegungen oder Schwingungen der Käsehorde auftreten kann.

Der Rahmen kann mit der Verstrebung fest verbunden sein. Alternativ kann es sich bei Rahmen und Verstrebung aber auch um separate Bauteile handeln.

Bevorzugt ist es, wenn der Rahmen mit mehreren Verstrebungen versehen wird, da auf diese Weise nicht nur in dem durch das Gewicht der Käsestücke am meisten belasteten Bereich der Käsehorde, sondern auch in anderen Bereichen eine unterstützende Funktion erzielt werden kann. Beim Einsatz von mehreren Verstrebungen ist es sinnvoll, diese so anzuordnen, dass sie mehr oder weniger gleichmäßig über die Fläche der Käsehorde verteilt sind, so dass keinerlei Durchbiegung der auf dem Rahmen aufliegenden Käsehorde möglich ist. Um dies zu erreichen, ist es nötig, die Verstrebungen und insbesondere auch den Rahmen aus einem nicht flexiblen Material, insbesondere aus Stahl, zu fertigen.

Besonders vorteilhaft ist es, wenn die Verstrebungen als senkrecht zueinander verlaufende Rahmenquerträger ausgebildet sind. Diese Rahmenquerträger können beispielsweise so angeordnet werden, dass sie jeweils entlang einer Symmetrie- bzw. Mittellinie der auf dem Rahmen aufliegenden Käsehorde verlaufen. Besonders vorteilhaft hat sich erwiesen, wenn bei einem rechteckigen Rahmen insgesamt drei Rahmenquerträger vorgesehen sind, von denen der erste und der zweite Rahmenträger parallel zueinander und der dritte senkrecht zu den ersten und zweiten Rahmenquerträgern verläuft. Die beiden parallel zueinander verlaufenden Rahmenquerträger erstrecken sich dabei senkrecht zu den beiden längeren Seiten des rechteckigen Rahmens, so dass diese beiden Rahmenträger gemeinsam eine gute Unterstützung des Rahmens über seine gesamte Längserstreckung sicherstellen. Der dritte Rahmenquerträger, welcher sich senkrecht zu dem ersten und dem zweiten Rahmenträger erstreckt, verläuft bevorzugt mittig im Rahmen und senkrecht zu dessen kürzerer Seite.

Der Rahmen kann an seinen Ecken Aufnahmebereiche für Füße der Käsehorde aufweisen. Durch das Eingreifen der Füße der Käsehorde in diese Aufnahmebereiche des Rahmens ist eine wechselseitige Positionierung oder Fixierung zwischen Käsehorde und Rahmen herstellbar, und zwar in solchen Richtungen, die in der Ebene der Auflagefläche der Käsehorde verlaufen. Letztlich wird durch die genannte Maßnahme also sichergestellt, dass sich Rahmen und Käsehorde nicht in einer Richtung zueinander verschieben, die parallel zur Ebene der Auflagefläche der Käsehorde verläuft.

Besonders bevorzugt ist es im Rahmen der Erfindung, wenn die beiden zusammengespannten Käsehorden der Wendevorrichtung während des Wendevorgangs von jeweils einem Rahmen derart unterstützt sind, dass die beiden Käsehorden zwischen den beiden Rahmen gehalten sind. Besonders vorteilhaft ist es, wenn diese Bedingung während des gesamten Wendevorgangs erfüllt ist.
Da bei dieser bevorzugten Ausführungsform der Erfindung beide Käsehorden, die zwischen sich die zu wendenden Käsestücke halten, von jeweils einem erfindungsgemäß ausgebildeten Rahmen unterstützt werden, ist sichergestellt, dass während des Wendevorgangs keine der beiden Käsehorden ausbauchen oder sich verformen kann, was letztlich bedeutet, dass sich die Auflageflächen beider Käsehorden über deren gesamte Fläche mit konstantem wechselseitigem Abstand parallel zueinander erstrecken. So wird sichergestellt, dass die zwischen den Käsehorden gehaltenen Käsestücke unabhängig von der Position, an der sie zwischen den Käsehorden gehalten sind, zuverlässig fixiert sind und sich nicht in einer Richtung parallel zu den Auflageflächen der Käsehorden bewegen können. Ein Verrutschen der Käsestücke während des Wendevorgangs wird somit durch eine überraschend einfache Maßnahme, nämlich durch den Einsatz zweier erfindungsgemäßer Rahmen, äußerst wirksam mit geringem wirtschaftlichem Aufwand verhindert.

Für den Fall, dass mit der erfindungsgemäßen Vorrichtung Käsestücke gehandhabt werden sollen, die während des Reifungsprozesses an den Käsehorden festwachsen, ist es von Vorteil, wenn eine Abdrückvorrichtung mit einer Vielzahl von von oben durch die Gitterstruktur der jeweils oberen Käsehorde bewegbaren Abdrückelemente vorgesehen ist. Die Abdrückelemente können dabei beispielsweise als Kautschuk-Nocken, als Draht- oder Kautschuk-Bügel, als Stiftelemente oder dergleichen ausgebildet sein. Während des Abdrückvorgangs bewegen sich die Abdrückelemente von oben durch die Gitterstruktur der oberen Käsehorde hindurch, ohne dabei eine direkte Kraft auf die Käsehorde auszuüben. Vielmehr drücken die Abdrückelemente ausschließlich auf die mit der Käsehorde verwachsenen Käsestücke, um diese von der Käsehorde abzulösen.

Bei Vorsehung der erwähnten Abdrückvorrichtung ist es von besonderem Vorteil, wenn bei Vorsehung lediglich einer Verstrebung am Rahmen diese Verstrebung mit einem Element der Gitterstruktur der Käsehorde ausgerichtet ist. So wird sichergestellt, dass die Abdrückelemente während des Abdrückvorgangs nicht direkt auf die Käsehorde und auch nicht direkt auf die Verstrebung des Rahmens drücken. Bei Vorsehung mehrerer Verstrebungen ist es dementsprechend sinnvoll, alle Verstrebungen mit jeweils einem Element der Gitterstruktur der Käsehorde auszurichten.

Weitere bevorzugte Ausführungsformen der Erfindung sind in den Unteransprüchen angegeben.

Die Erfindung wird nachfolgend anhand eines Ausführungsbeispiels unter Bezugnahme auf die Zeichnungen erläutert; in diesen zeigen:
- Fig. 1: eine Draufsicht auf einen schematisch dargestellten, in einer erfindungsgemäßen Wendevorrichtung zum Einsatz gelangenden Rahmen gemäß einer möglichen Ausführungsform,
- Fig. 2: eine Seitenansicht des Rahmens gemäß Fig. 1,
- Fig. 3: eine weitere Draufsicht auf einen Rahmen gemäß Fig. 1 mit auf den Rahmen aufgelegter Käsehorde, und
- Fig. 4: eine schematische Seitenansicht zweier zusammengespannter, von jeweils einem Rahmen gemäß den Fig. 1 bis 3 unterstützter Käsehorden mit zwischen den Käsehorden befindlichen Käsestücken.

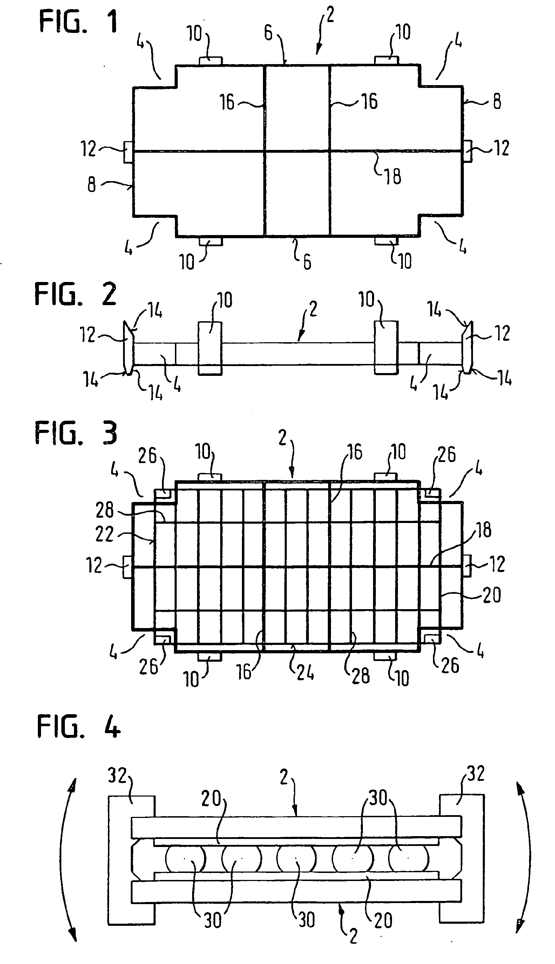

Der in Fig. 1 dargestellte Rahmen 2 besitzt eine im Wesentlichen rechteckige Form, wobei an allen vier Eckbereichen jeweils Aussparungen vorgesehen sind, welche Aufnahmebereiche 4 für Füße von Käsehorden bilden.

Aufgrund seiner im Wesentlichen rechteckigen Form besitzt der Rahmen 2 zwei einander gegenüberliegende längere Seiten 6 sowie zwei einander gegenüberliegende kürzere Seiten 8. An den längeren Seiten 6 sind jeweils zwei Zentrierelemente 10 und an den kürzeren Seiten 8 jeweils ein Zentrierelement 12 vorgesehen, welche zum einen dazu dienen, dass Auflegen von Käsehorden auf den Rahmen 2 zu erleichtern und zum anderen dazu geeignet sind, das korrekte Positionieren des Rahmens 2 in einer erfindungsgemäßen Wendevorrichtung zu erleichtern. Zu diesem Zweck sind die Zentrierelemente 10, 12 mit Schrägflächen 14 versehen, die aus Fig. 2 ersichtlich sind. Die oberen Schrägflächen 14 bilden dabei in ihrer Gesamtheit gewissermaßen eine Trichterform, um so das von oben her erfolgende Einführen einer Käsehorde zwischen die Zentrierelemente 10, 12 zu unterstützen.
Die beiden aufeinander zulaufenden Schrägflächen 14 am unteren Ende jedes Zentrierelements 10, 12 dienen dazu, das Einführen der Zentrierelemente 10, 12 in dafür vorgesehene Aufnahmen der erfindungsgemäßen Wendevorrichtung zu erleichtern.

Aus Fig. 2 ist ersichtlich, dass sich die Zentrierelemente 10, 12 etwas weiter über die Oberseite des Rahmens 2 als über dessen Unterseite hinaus erstrecken.

Erfindungsgemäß ist der Rahmen 2 mit insgesamt drei Verstrebungen 16, 18 ausgestattet, welche jeweils als Rahmenquerträger, d.h. als Trägerelemente, die sich senkrecht zu einer Seite 6, 8 des Rahmens 2 erstrecken, ausgebildet sind. Die beiden Verstrebungen 16 verlaufen parallel zueinander senkrecht zu den längeren Seiten 6 des Rahmens 2. Beide Verstrebungen 16 besitzen jeweils den gleichen Abstand zu der ihnen jeweils nächstgelegenen kürzeren Seite 8 des Rahmens 2. Der gegenseitige Abstand der Verstrebungen 16 beträgt ungefähr ein Fünftel des gegenseitigen Abstandes der kürzeren Seiten 8 des Rahmens 2, wobei der gegenseitige Abstand der Verstrebungen 16 ohne weiteres bis zu einem Drittel des genannten Abstandes der kürzeren Seiten 8 vergrößert werden könnte.

Die Verstrebung 18 erstreckt sich senkrecht zu den Verstrebungen 16 und verläuft von der einen kürzeren Seite 8 des Rahmens bis zur anderen kürzeren Seite 8, wobei sie sich parallel zu den längeren Seiten 6 des Rahmens 2 erstreckt. Sie ist ferner mittig zwischen den beiden längeren Seiten 6 des Rahmens 2 angeordnet.

Durch die in Fig. 1 dargestellte Anordnung der Verstrebungen 16, 18 wird erreicht, dass eine auf den Rahmen 2 aufgelegte Käsehorde 20, welche in Fig. 3 dargestellt ist, von unten derart abgestützt wird, dass sie sich nicht durchbiegen kann und dass sie bei herabfallenden Käsestücken keine Schwingungen ausführen kann.

Die in Fig. 3 dargestellte Käsehorde 20 besitzt eine rechteckige Form, wobei die kürzeren Seiten 22 etwas kürzer als die kürzeren Seiten 8 des Rahmens 2 ausgebildet sind und wobei die längeren Seiten 24 der Käsehorde 20 ebenfalls etwas kürzer als die längeren Seiten 6 des Rahmens 2 ausgebildet sind. In diesem Fall ist die Umfangslinie des Rahmens 2 im Wesentlichen an die Umfangslinie der Käsehorde 20 angepasst.

In ihren vier Eckbereichen weist die Käsehorde jeweils einen Fuß 26 auf, welcher sich nach unten, in Richtung des die Käsehorde 20 unterstützenden Rahmens 2 erstreckt und welcher in jeweils einen ihm zugeordneten Aufnahmebereich 4 des Rahmens 2 eingreift. Durch dieses Eingreifen der Füße 26 in die Aufnahmebereiche 4 ist sichergestellt, dass sich die Käsehorde 20 gegenüber dem Rahmen in einer Richtung parallel zur Zeichenebene der Fig. 3 nur geringfügig verschieben kann.

Die Käsehorde 20 weist in aus dem Stand der Technik bekannter Weise eine Gitterstruktur mit Längs- und Querverstrebungen 28 auf, welche üblicherweise als dünne Metallrundstäbe ausgeführt sind und die letztlich einen Auflagerost für Käsestücke bilden.

Die Verstrebungen 16, 18 des Rahmens 2 sind so positioniert, dass sie bei einer Draufsicht auf die Käsehorde 20 bzw. den Rahmen 2 mit Längs- und Querverstrebungen 28 der Käsehorde 20 fluchten, was bedingt, dass ein Durchgriff von Abdrückelementen einer Abdrückvorrichtung durch beliebige Zwischenräume der Käsehorde 20 durch die Verstrebungen 16, 18 des Rahmens 2 nicht behindert wird.

Fig. 4 zeigt in schematischer Darstellung unter Weglassung der Zentrierelemente 10, 12 des Rahmens 2 und der Füße 26 der Käsehorden 20 Käsestücke 30, die zwischen zwei parallel zueinander angeordneten Käsehorden 20 gehalten sind. Die Käsehorden 20 berühren dabei die Ober- bzw. Unterseite der Käsestücke 30 jeweils mit ihrer Oberseite bzw. Auflagefläche, was bedeutet, dass sich die in Fig. 4 nicht dargestellten Füße 26 der unteren Käsehorde 20 nach unten und die in Fig. 4 ebenfalls nicht dargestellten Füße 26 der oberen Käsehorde 20 nach oben erstrecken.

Beide Käsehorden 20 sind auf ihrer jeweiligen Unterseite von jeweils einem Rahmen 2 unterstützt, welcher entsprechend den Fig. 1 und 2 ausgebildet sein kann.

Die beiden Rahmen 2 sind gemäß Fig. 4 mit einer lediglich schematisch dargestellten Klemmvorrichtung 32 in paralleler Ausrichtung zueinander fixiert.

Durch die in Fig. 4 dargestellte Anordnung ist sichergestellt, dass sich die Auflageflächen der beiden Käsehorden 20 durchwegs mit konstantem Abstand zueinander erstrecken, wobei die Verstrebungen 16, 18 der Rahmen 2 dafür sorgen, dass kein Verbiegen oder Ausbauchen der Käsehorden 20 stattfinden kann. Folglich sind die Käsestücke 30 zwischen den Käsehorden 20 zuverlässig fixiert, so dass die in Fig. 4 dargestellte Gesamtanordnung problemlos in Pfeilrichtung verschwenkt werden kann, ohne dass ein störendes Verrutschen der Käsestücke 30 relativ zu den Auflageflächen der Käsehorden 20 erfolgen kann.

### Bezugszeichenliste

- 2: Rahmen
- 4: Aufnahmebereiche
- 6: längere Seiten
- 8: kürzere Seiten
- 10: Zentrierelement
- 12: Zentrierelement
- 14: Schrägflächen
- 16: Verstrebungen
- 18: Verstrebung
- 20: Käsehorde
- 22: kürzere Seiten
- 24: längere Seiten
- 26: Füße
- 28: Längs- und Querverstrebungen
- 30: Käsestücke
- 32: Klemmvorrichtung

## Patentansprüche

1. Wendevorrichtung für Käsehorden (20) mit einer Einrichtung (32) zum Zusammenspannen einer oberen und einer unteren Käsehorde (20) und zum Wenden der zusammengespannten Käsehorden (20),
**dadurch gekennzeichnet,**
**dass** zumindest die jeweils untere Käsehorde (20) auf einem Rahmen (2) aufliegt, dessen Umfangslinie im Wesentlichen an die Umfangslinie der Käsehorde (20) angepasst ist, und
**dass** zumindest eine die Käsehorde (20) in einem von ihrer Umfangslinie beabstandeten Bereich unterstützende Verstrebung (16, 18) vorgesehen ist.

2. Wendevorrichtung nach Anspruch 1,
**dadurch gekennzeichnet,**
**dass** mehrere, insbesondere mit dem Rahmen (2) gekoppelte Verstrebungen (16, 18) vorgesehen sind.

3. Wendevorrichtung nach Anspruch 2,
**dadurch gekennzeichnet,**
**dass** die Verstrebungen (16, 18) als senkrecht zueinander verlaufende Rahmenquerträger ausgebildet sind.

4. Wendevorrichtung nach Anspruch 3,
**dadurch gekennzeichnet,**
**dass** bei einem rechteckigen Rahmen (2) insgesamt drei Rahmenquerträger (16, 18) vorgesehen sind, von denen der erste und der zweite Rahmenträger (16) parallel zueinander und der dritte (18) senkrecht zu den ersten und zweiten Rahmenquerträgern (16) verläuft.

5. Wendevorrichtung nach Anspruch 4,
**dadurch gekennzeichnet,**
**dass** die ersten und zweiten Rahmenquerträger (16) parallel zu der kürzeren Seite (8) des Rahmens (2) verlaufen.

6. Wendevorrichtung nach einem der Ansprüche 4 oder 5,
**dadurch gekennzeichnet,**
**dass** der dritte Rahmenquerträger (18) mittig im Rahmen (2) verläuft.

7. Wendevorrichtung nach einem der vorhergehenden Ansprüche,
**dadurch gekennzeichnet,**
**dass** der Rahmen (2) an seinen Ecken Aufnahmebereiche (4) für Füße (26) der Käsehorde (20) aufweist.

8. Wendevorrichtung nach Anspruch 7,
**dadurch gekennzeichnet,**
**dass** durch ein Eingreifen der Füße (26) der Käsehorde (20) in die Aufnahmebereiche (4) des Rahmens (2) eine wechselseitige Positionierung zwischen Käsehorde (20) und Rahmen (2) in solche Richtungen herstellbar ist, die in der Ebene der Käsehorde (20) verlaufen.

9. Wendevorrichtung nach einem der vorhergehenden Ansprüche,
**dadurch gekennzeichnet,**
**dass** die beiden zusammengespannten Käsehorden (20) während des Wendevorgangs von jeweils einem Rahmen (2) derart unterstützt sind, dass die beiden Käsehorden (20) zwischen den beiden Rahmen (2) gehalten sind.

10. Wendevorrichtung nach einem der vorhergehenden Ansprüche,
**dadurch gekennzeichnet,**
**dass** eine Abdrückvorrichtung mit einer Vielzahl von von oben durch die Gitterstruktur der jeweils oberen Käsehorde (20) bewegbaren Abdrückelementen vorgesehen ist.

11. Wendevorrichtung nach einem der vorhergehenden Ansprüche,
**dadurch gekennzeichnet,**
**dass** zumindest eine Verstrebung (16, 18) mit einem Element der Gitterstruktur der Käsehorde (20) ausgerichtet ist.

12. Wendevorrichtung nach einem der vorhergehenden Ansprüche,
**dadurch gekennzeichnet,**
**dass** alle Verstrebungen (16, 18) mit jeweils einem Element der Gitterstruktur der Käsehorde (20) ausgerichtet sind.

## Claims

1. A turning device for cheese trays (20) comprising a device (32) for the clamping together of an upper and a lower cheese tray (20) and for the turning of the clamped together cheese trays (20),
**characterised in that**
at least the respective lower cheese tray (20) lies on a frame (2) whose peripheral line is substantially matched to the peripheral line of the cheese tray (20); and
**in that** at least one strut (16, 18) is provided which supports the cheese tray (20) in a region spaced apart from its peripheral line.

2. A turning device in accordance with claim 1, **characterised in that** a plurality of struts (16, 18), in particular struts coupled to the frame (2), are provided.

3. A turning device in accordance with claim 2, **characterised in that** the struts (16, 18) are made as frame crossbeams extending perpendicular to one another.

4. A turning device in accordance with claim 3, **characterised in that**, with a rectangular frame (2), a total of three frame crossbeams (16, 18) are provided of which the first and the second frame beams (16) extend parallel to one another and the third (18) extends perpendicular to the first and second frame crossbeams (16).

5. A turning device in accordance with claim 4, **characterised in that** the first and second frame crossbeams (16) extend parallel to the shorter side (8) of the frame (2).

6. A turning device in accordance with one of the claims 4 or 5, **characterised in that** the third frame crossbeam (18) extends centrally in the frame (2).

7. A turning device in accordance with any one of the preceding claims, **characterised in that** the frame (2) has receiving regions (4) at its corners for feet (26) of the cheese tray (20).

8. A turning device in accordance with claim 7, **characterised in that** a reciprocal positioning between the cheese tray (20) and the frame (2) can be established in those directions which extend in the plane of the cheese tray (20) by an engagement of the feet (26) of the cheese tray (20) into the receiving regions (4) of the frame (2).

9. A turning device in accordance with any one of the preceding claims, **characterised in that** the two clamped together cheese trays (20) are supported by one respective frame (2) during the turning procedure such that the two cheese trays (20) are held between the two frames (2).

10. A turning device in accordance with any one of the preceding claims, **characterised in that** a release mechanism having a plurality of release elements movable from above through the grid structure of the respective upper cheese tray (20) is provided.

11. A turning device in accordance with any one of the preceding claims, **characterised in that** at least one strut (16, 18) is aligned with an element of the grid structure of the cheese tray (20).

12. A turning device in accordance with any one of the preceding claims, **characterised in that** all the struts (16, 18) are respectively aligned with an element of the grid structure of the cheese tray (20).

## Revendications

1. Dispositif de retournement pour des clayons à fromages (20), comportant un moyen (32) pour serrer ensemble des clayons à fromages supérieur et inférieur (20) et pour retourner les clayons à formages (20) serrés ensemble,
**caractérisé en ce que**
au moins le clayon à fromages (20) inférieur respectif repose sur un cadre dont la ligne périphérique est adaptée sensiblement à la ligne périphérique du clayon à formages (20), et
il est prévu au moins une entretoise (16, 18) qui soutient le clayon à fromages (20) dans une zone espacée de sa ligne périphérique.

2. Dispositif de retournement selon la revendication 1,
**caractérisé en ce que**
il est prévu plusieurs entretoises (16, 18) couplées en particulier au cadre (2).

3. Dispositif de retournement selon la revendication 2,
**caractérisé en ce que**
les entretoises (16, 18) sont réalisées sous forme de supports transversaux de cadre s'étendant perpendiculairement à l'un l'autre.

4. Dispositif de retournement selon la revendication 3,
**caractérisé en ce que**
dans un cadre rectangulaire (2), il est prévu au total trois supports transversaux de cadre (16, 18) dont le premier et le second support de cadre (16) s'étendent parallèlement l'un à l'autre et le troisième (18) s'étend perpendiculairement au premier et au second support transversal de cadre (16).

5. Dispositif de retournement selon la revendication 4,
**caractérisé en ce que**
le premier et le second support transversal de cadre (16) s'étendent parallèlement au petit côté (8) du cadre (2).

6. Dispositif de retournement selon l'une des revendications 4 ou 5,
**caractérisé en ce que**
le troisième support transversal de cadre (18) s'étend au milieu dans le cadre (2).

7. Dispositif de retournement selon l'une des revendications précédentes,
**caractérisé en ce que**
le cadre (2) présente à ses coins des zones de réception (4) pour des pieds (26) du clayon à fromages (20).

8. Dispositif de retournement selon la revendication 7,
**caractérisé en ce que**
par engagement des pieds (26) du clayon à fromages (20) dans les zones de réception (4) du cadre (2), il est possible d'établir un positionnement réciproque entre le clayon à fromages (20) et le cadre (2) dans des directions qui s'étendent dans le plan du clayon à formages (20).

9. Dispositif de retournement selon l'une des revendications précédentes,
**caractérisé en ce que**
les deux clayons à fromages (20) serrés ensemble sont soutenus par un cadre respectif (2) pendant l'opération de retournement, de telle sorte que les deux clayons à formages (20) sont retenus entre les deux cadres (2).

10. Dispositif de retournement selon l'une des revendications précédentes,
**caractérisé en ce que**
il est prévu un dispositif de pressage muni d'une multitude d'éléments de pressage mobiles depuis le haut à travers la structure grillagée du clayon à formages (20) supérieur respectif.

11. Dispositif de retournement selon l'une des revendications précédentes, **caractérisé en ce qu'**au moins une entretoise (16, 18) est alignée avec un élément de la structure grillagée du clayon à formages (20).

12. Dispositif de retournement selon l'une des revendications précédentes,
**caractérisé en ce que**
toutes les entretoises (16, 18) sont alignées chacune avec un élément de la structure grillagée du clayon à fromages (20).
